(19) Europäisches Patentamt
European Patent Office
Office européen des brevets

(11) EP 3 841 186 B1

(12) **EUROPEAN PATENT SPECIFICATION**

(45) Date of publication and mention of the grant of the patent:
**17.07.2024 Bulletin 2024/29**

(21) Application number: **19758399.0**

(22) Date of filing: **22.08.2019**

(51) International Patent Classification (IPC):
***C10G 3/00*** *(2006.01)* ***B01J 21/18*** *(2006.01)*

(52) Cooperative Patent Classification (CPC):
**B01J 27/24; C10G 3/44; C10G 3/50;** B01J 21/18; B01J 21/185; B01J 23/44; C10G 2300/1011; C10G 2400/04; Y02P 30/20

(86) International application number:
**PCT/EP2019/072477**

(87) International publication number:
**WO 2020/039031 (27.02.2020 Gazette 2020/09)**

(54) **HYDROTHERMAL METHOD FOR PRODUCING RENEWABLE PARAFFINIC HYDROCARBONS**

HYDROTHERMISCHES VERFAHREN ZUR HERSTELLUNG VON ERNEUERBAREN PARAFFINISCHEN KOHLENWASSERSTOFFEN

PROCÉDÉ HYDROTHERMAL DESTINÉ À LA PRODUCTION D'HYDROCARBURES PARAFFINIQUES RENOUVELABLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.08.2018 SE 1850999**

(43) Date of publication of application:
**30.06.2021 Bulletin 2021/26**

(73) Proprietor: **Eco-Oil Miljöbränslen i Sverige AB**
**SE-931 42 SKELLEFTEÅ (SE)**

(72) Inventors:
- **MIKKOLA, Jyri-Pekka**
  **903 23 Umeå (SE)**
- **VANKLINT, Kent**
  **931 42 Skellefteå (SE)**
- **SILJEBO, William**
  **916 93 Bjurholm (SE)**
- **KONWAR, Lakhya Jyoti**
  **907 34 Umeå (SE)**
- **SAMIKANNU, Ajaikumar**
  **907 32 Umeå (SE)**

(74) Representative: **Ström & Gulliksson AB**
**Box 5275**
**102 46 Stockholm (SE)**

(56) References cited:
**US-A1- 2016 010 000 US-A1- 2016 251 580**

- **HOSSAIN MD ZAKIR ET AL: "Continuous low pressure decarboxylation of fatty acids to fuel-range hydrocarbons within situhydrogen production", FUEL, vol. 212, 2017, pages 470 - 478, XP085280100, ISSN: 0016-2361, DOI: 10.1016/J.FUEL.2017.09.092**
- **SHIN-ICHIRO FUJITA ET AL: "Nitrogen-Doped Activated Carbon as Metal-Free Catalysts Having Various Functions", C JOUNAL OF CARBON RESEARCH, vol. 3, no. 4, 18 October 2017 (2017-10-18), pages 31, XP055634325, DOI: 10.3390/c3040031**
- **SERGIY POPOV ET AL: "Rapid Hydrothermal Deoxygenation of Oleic Acid over Activated Carbon in a Continuous Flow Process", ENERGY & FUELS., vol. 29, no. 5, 22 April 2015 (2015-04-22), WASHINGTON, DC, US., pages 3377 - 3384, XP055635010, ISSN: 0887-0624, DOI: 10.1021/acs.energyfuels.5b00308**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 841 186 B1

## Description

### Technical field of the invention

The present invention relates to a method for producing hydrocarbons having 6 to 20 carbon atoms, further a system for performing the method is provided as well as use of a catalyst for producing the hydrocarbons.

### Background

Traditional biodiesel (fatty alkyl esters) produced from fats and oils by well-established transesterification possess several drawbacks such as high viscosity, low energy density, strong solvent properties, and poor shelf-life (oxidative fouling). Due to these shortcomings, the use of oxygenated methyl/ethyl (alkyl) esters (biodiesel) as fuels in existing diesel engines is often limited to a low volumetric percentage (5-7wt%) in petroleum diesel.

Hydrotreated vegetable oil (or green diesel), on the other hand are hydrocarbon-based renewable biofuels derived from vegetable oils and fats. They exhibit physico-chemical properties that are indistinguishable from the petroleum diesel and are therefore suitable for direct application in the existing engines. Furthermore, they do not suffer from the stability issues related to biodiesel. US8022258 B2 describes a process for the manufacture of diesel range hydrocarbons, wherein $NiMo/Al_2O_3$ or $CoMo/Al_2O_3$ hydrogenation catalysts are used.

However, there are major drawbacks in green diesel production via hydrotreatment including the use of molecular $H_2$ (petroleum based), petroleum solvent as diluting agents and the use of expensive, toxic precious metals catalysts, such as Pt, Pd, Mo and Co.

Thus, hydrothermal decarboxylation of fatty acids and fatty derivatives with carbon-based catalysts has recently emerged as an alternative, green method for producing green diesel/diesel-like hydrocarbons. However, the process operates at supercritical or near supercritical steam temperature (380-400 °C, >220 bar), which makes scaling up and continuous processing uneconomical and unrealistic. US 2016/0251580 A1 discloses a method of processing plant oil to produce high grade fuel, comprising treating an oil under hydrothermal conditions in the presence of an activated carbon essentially free of a metal catalyst. The temperature is 350-400 °C and the pressure is 3500 psi (241 bar).

Hydrothermal decarboxylation has also been demonstrated at lower temperatures (350 °C, 160 bar) using Pt or Pd catalysts supported on carbon. However, this method is associated with problem with reusability and stability of the expensive metal catalysts.

Z. Hossain et al. in Fuel Volume 212, 15 January 2018, Pages 470-478 discloses a decarboxylation process with oleic acid in a continuous fixed bed reactor using activated carbon, which gave surprisingly high quality fuel-like hydrocarbons with no external hydrogen. The results showed that activated carbon performed as a catalyst for both decarboxylation and *in situ* hydrogen production. The reaction parameters for maximum degree of decarboxylation (91%) was found to be 400 °C, 2 h and water-to-oleic acid ratio of 4:1. The liquid product was found to consist of mainly saturated hydrocarbons containing heptadecane (89.3% selectivity) as the major compound. The liquid product was found to have a similar density and higher heating value (HHV) to commercial diesel and jet fuel.

US 2016/251580 discloses a method of processing plant oil to produce high grade fuel such as biodiesel and jet fuel. Particularly, a method is provided that includes treating an oil under hydrothermal conditions in the presence of i) an acid that acts as an in situ source of hydrogen and ii) an activated carbon essentially free of a metal catalyst, wherein the treating results in production of liquid hydrocarbons for use as a fuel.

S. Popov et al. in Energy Fuels 2015, 29, 5, 3377-3384 discloses conversion of fatty acids into n-alkanes. Fuel range hydrocarbons were obtained in a continuous flow process from oleic acid using near- and supercritical water as the reaction medium, granulated activated carbon as a catalyst, and 1% v/v formic acid as an in situ source of hydrogen. The main reaction pathways were hydrogenation of oleic acid and decarboxylation/decarbonylation of the resulting stearic acid to form heptadecane.

### Summary of the invention

It is an object of the present invention to alleviate at least some of the problems in the prior art and to provide an improved method for producing hydrocarbons.

According to a first aspect of the invention, the above and other objects of the invention are achieved, in full or at least in part, by a method as defined by claim 1.

The method may be carried out as either a batch process or as a continuous process. By a feedstock comprising saturated fatty or unsaturated fatty acids, and/or derivatives thereof is meant a feedstock comprising of varying amounts (0-99wt%) of saturated fatty acids, and/or derivatives thereof. In one embodiment, the feedstock comprises at least 99wt% saturated fatty acids, and/or derivatives thereof. Both fatty acids as well as derivatives of fatty acids including mixtures thereof can be used. Any saturated fatty acid or related derivative can be used.

The method according to the invention is performed at a lower pressure than previously disclosed methods for fatty acid hydrogenation-decarboxylation and facilitate simultaneous hydrogenation, decarboxylation and cracking of fatty acids, and the method is thus an industrially viable method for continuous green diesel production in a single step. The wording low-pressure should be interpreted in a relative sense compared to other methods in the prior art with a higher pressure.

In addition, the catalyst used is a metal-free catalyst, which significantly reduces the costs of green diesel production. The catalyst can be obtained by chemically or physically activating nitrogen rich biomass such as chitin, chitosan, de-oiled press cakes or any other suitable carbon precursor rich in nitrogen (melamine resin, melamine).

Furthermore, the deoxygenation/decarboxylation reaction catalyzed by carbon materials are accompanied by 33-38 wt% (C6-C16) cracking products. In other words, the overall reaction is a combination of transfer hydrogenation, decarboxylation and hydrothermal cracking. This is in contrast to the process catalyzed by precious metals such as Pt and Pd where decarboxylation and hydrogenation products are observed exclusively. The cracking/isomerization step for obtaining a diesel range liquid hydrocarbons may be eliminated using the method according to the present invention.

Thus, the method according to the invention enables direct production of sulphur-free liquid range C6-C20 hydrocarbons from a single or mixed feed without additional hydrocracking/isomerization steps. However, it should be noted that an additional isomerization or blending step may be needed to improve cold flow properties for winter applications.

According to the invention, the hydrogenation-decarboxylation catalyst is an inexpensive N- or O-doped carbon material.

An advantage of using N- or O-doped carbon material as a hydrogenation-decarboxylation catalyst is that the conversion of the feedstock into 33-38wt% liquid range cracking products (C6-C16) is further enhanced.

According to a second embodiment, the contact time of the feedstock with the hydrogenation-decarboxylation catalyst is in the range from 180 to 250 minutes, when operating in batch mode. When operating in continuous mode the weight hourly space velocity (WHSV) is in the interval 0.05-10/h. WHSV is defined as the weight of feed flowing per unit weight of the catalyst per hour. It is calculated as the feed flow rate per hour divided by the mass of the catalyst. WHSV is calculated by weight.

According to one embodiment, the method also comprises, the step of selectively hydrogenating a feed comprising unsaturated fatty acids, and/or derivatives thereof by bringing the feedstock in contact with a $H_2$-donor in the presence of $H_2O$ and a carbon catalyst, wherein the temperature is in the range 200-250 °C and the pressure is in the range 10-30 bar; wherein the hydrogenation results in producing the feedstock of substantially saturated fatty acids and/or derivatives thereof.

According to the invention the hydrogenation-decarboxylation catalyst comprises N-doped active carbon and O-doped active carbon material.

Thus, one advantage of this embodiment is that unsaturated fatty acids and/or derivatives thereof may be directly converted in a single reactor into saturated paraffinic hydrocarbons having 6 to 20 carbon atoms, i.e. green diesel.

In one embodiment, the contact time of the feedstock with the hydrogenation-decarboxylation catalyst is in the interval 60-120 minutes, when operating in batch mode.

In one embodiment, the weight hourly space velocity (WHSV) for the hydrogenation is in the interval 0.05-10/h, when operating in continuous mode for a single reactor configuration.

In one embodiment, the ratio of the feed to $H_2O$ is in the interval 1:4-1:10 calculated by weight.

In one embodiment, the ratio of the $H_2$-donor to feed is less than 0.77 calculated by weight. The exact ratio depends on the fatty acid composition of the feed.

According to the invention, the $H_2$-donor is at least one selected from the group consisting of a carboxylic acid, and an alcohol having between 1 and 4 carbon atoms. In one embodiment, the $H_2$-donor is at least one selected from the group consisting of HCOOH, $CH_3COOH$, $CH_3OH$, $C_2H_5OH$, and glycerol.

The feedstock, which is converted into paraffinic hydrocarbons having 6 to 20 carbon atoms, i.e. green diesel, may originate from plants (including algae) or animals.

This is advantageous since the net emission of $CO_2$ will be zero for a fuel produced by the method according to the invention.

The feedstock in one embodiment comprises at least one from saturated and unsaturated fatty acids having 8-18 carbon atoms. The feedstock in one embodiment, comprises at least one from fatty glycerides (mono-, di-, and triglycerides), and fatty alkyl esters made of fatty acids having 8-18 carbon atoms. In one embodiment, the feedstock comprises at least one of octatonic acid, palmitic acid, stearic acid, oleic acid, linoleic acid, $\gamma$-linolenic acid, and tristearin. In one embodiment, the feedstock comprises at least one of tall oil fatty acids (TOFA), coconut oil, rapeseed oil, sunflower oil, and jatropha oil. The feedstock may comprise any mixture of the above mentioned components.

According to one embodiment, the method is carried out as a batch process. According to an alternative embodiment, the method is carried out as a continuous process.

In one embodiment, which is not part of the claimed invention, of the second aspect the system comprises a

means (BPR) capable of maintaining the system pressure in the interval 10-30 bar. Examples of such means include but is not limited to a pump and a pressure regulator.

In one embodiment, which is not part of the claimed invention, of the second aspect the system comprises a means capable of maintaining the temperature in the reactor (R) in the interval 350-400 °C. Examples of such means include but is not limited to an oven. Other heating devices are also encompassed, suitably combined with a thermostat for keeping the reactor temperature at the desired value.

In one embodiment, which is not part of the claimed invention, the system comprises a gas liquid separator to separate liquid hydrocarbons from gas.

According to one embodiment, which is not part of the claimed invention, the use of heteroatom-doped carbon in the hydrogenation and/or decarboxylation of a fatty acid is provided.

In one embodiment, the carbon precursor is of biomass origin.

The process is easy to scale up for use both in a batch process as well as in a continuous process.

Other objectives, features and advantages of the present invention will appear from the following detailed disclosure, from the attached claims, as well as from the drawings. It is noted that the invention relates to all possible combination of features.

Generally, all terms used in the claims are to be interpreted according to their ordinary meaning in the technical field, unless explicitly defined otherwise. All references to "a/an/the [method, step, element, etc.]" are to be interpreted openly as referring to at least one instance of said method, step, element, etc., unless explicitly stated otherwise. The steps of any method disclosed herein do not have to be performed in the exact order disclosed, unless explicitly stated.

As used herein, the term "comprising" and variations of that term are not intended to exclude other additives, components, integers or steps.

Brief description of drawings

By way of example, embodiments of the present invention will now be described with reference to the accompanying drawings in which:

Figure 1 is a schematic diagram of a plant comprising a system according to the invention;
Figure 2 shows plausible reactions leading to formation of $H_2$ from formic acid, acetic acid, methanol, ethanol and glycerin;
Figure 3 shows a reaction leading to the formation of saturated fatty acids from the different feedstocks;
Figure 4 shows a reaction leading to the formation of hydrocarbon mixtures from saturated fatty acids;
Figure 5 shows decarboxylation activity as a function of time on stream for ACC (O-doped carbocatalyst) at different WHSV ($h^{-1}$). Conditions: T = 390 °C, 24.1 bar, Feed 1 (caprylic acid), Feed 2 (deionized $H_2O$), $H_2O$/Feed 1 (w/w) = 7.5:1;
Figure 6 shows decarboxylation activity as a function of time on stream for B2 and ACC at 0.75 $h^{-1}$ WHSV. Conditions: T = 390°C, 13.8 bar ACC and 24.1 bar B2, Feed 1 (50:50 w/w mixture of coconut oil and caprylic acid), Feed 2 (deionized $H_2O$), $H_2O$/Feed 1 (w/w) = 7.5:1;
Figure 7 shows decarboxylation activity as a function of time on stream for B2 0.75 $h^{-1}$ WHSV. Conditions: T = 390 °C, 24.1 bar, Feed 1 (60:40, w/w mixture of rapeseed and coconut TG), Feed 2 (4.3% aq. HCOOH), $H_2O$/Feed 1 (w/w) = 7.5:1, HCOOH/Feed 1 (w/w) = 0.36;
Figure 8 shows decarboxylation activity as a function of time on stream for B2 0.65 $h^{-1}$ WHSV. Conditions: T = 390 °C, 24.1 bar, Feed 1 (70:30, w/w mixture of rapeseed TG and TOFA), Feed 2 (10% aq. HCOOH), $H_2O$/Feed 1 (w/w) = 6.5:1, HCOOH/Feed 1 (w/w) = 0.64;
Figure 9 shows decarboxylation activity as a function of time on stream for B3, regenerated B3 and ACC at different WHSV (0.22-0.45$h^{-1}$). Conditions: T = 370-380 °C, 24 bar, Feed 1 (TOFA), Feed 2 (10% aq. HCOOH), $H_2O$/Feed 1 (w/w) = 6.5:1, HCOOH/Feed 1 (w/w) = 0.64;
Figure 10 shows gas chromatograms of hydrocarbon products in comparison to the standard hydrocarbon mix; and
Figure 11 shows $^{1}H$ (above) and $^{13}C$ (below) NMR liquid products obtained from decarboxylation of tristearin at 380 °C with B2 (CDCl3 was used as solvent).

Detailed description of the invention

Hereinafter, certain embodiments will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art.

In short, an industrially viable hydrothermal process for continuous green hydrocarbon production is disclosed. The method described uses a combination of catalytic transfer hydrogenation and low pressure hydrothermal decarboxylation for producing liquid range hydrocarbons from a wide range of fatty acids and related derivatives.

Hydrothermal implies that water is involved in the process.

According to the invention, a method for converting a biomass feed into diesel range hydrocarbons (linear hydrocarbons having 6-20 carbon atoms, i.e. C6-C20), also called green diesel, is provided.

Biomass feed composition

The biomass feed In one embodiment, comprises natural oil and/or fat in the form of free fatty acids and/or derivatives of fatty acids and/or fatty glycerides (mono-, di- and triglycerides) originating from plants (including algae) and/or animals. Thus, fatty acids, fatty glycerides (mono-, di- and triglycerides), and related derivatives (fatty alkyl mono esters) or their mixtures may be converted into green hydrocarbons by a method according to the invention. Derivatives of fatty acids are e.g. esters of fatty acids. The process could also be extended to work with more acidic fast pyrolysis oils either by blending with the oleaginous biomass feedstocks or in neat form. The process is centered on the catalytic transfer hydrogenation and decarboxylation of hydrogenated fatty (saturated) acids under low pressure hydrothermal conditions (350-400 °C, 10-30 bar) in a continuous or discontinuous (batch) reactor.

The free fatty acids and/or glycerides may originate from traditional oil seed crops such as coconut, rapeseed, sun flower seeds and soybeans, unconventional crops such as jatropha and jojoba, aquatic species such as microalgae and even from animals, animal manure and/or sewage. However, free fatty acids and/or glycerides from any source may be converted into green hydrocarbons by a method according to the invention.

The free fatty acids and/or glycerides may be saturated or unsaturated. In addition, esters of fatty acids, such as for example methyl or ethyl esters of fatty acids may also be converted into green hydrocarbons by a method according to the invention.

Examples of fatty acids, which may be converted into green hydrocarbons by a method according to the invention, include but are not limited to caprylic acid, octatonic acid, palmitic acid, stearic acid, oleic acid, linoleic acid, γ-linolenic acid and tall oil fatty acids (TOFA, grade: FOR2x_004, 193 mgKOH/g).

The fatty glycerides or esters, which may be converted into green hydrocarbons by a method according to the invention, may include tristearin, coconut oil, rapeseed oil, sunflower oil, rapeseed methyl and ethyl esters and pyrolysis oils (wood derived supplied by EMPYRO, 15-30 wt% moisture, pH 2.5-3). In addition to the individual feeds, blends of different feedstocks were also evaluated upon the catalytic process/upgrading.

In Table 1, the fatty acid composition of three different examples of biomass feeds, which may be converted into green hydrocarbons by a method according to the invention, are shown.

***Table 1.*** *Fatty acid compositions of different biomass feeds*

| **Fatty acid*** | **TOFA** | **Rapeseed oil/ ester** | **Sunflower oil** | **Coconut oil** |
|---|---|---|---|---|
| 8:0, caprylic (wt%) | | | | 4.4 |
| 10:0, capric (wt%) | | | | 7.5 |
| 12:0, lauric (wt%) | | | | 47.7 |
| 14:0, myristic acid (wt%) | | | | 20 |
| 16:0, palmitic (wt%) | | 5.3 | 6.38 | 8.2 |
| 18:0, stearic (wt%) | 1.56 | 23.5 | 3.15 | 2.6 |
| 18:1, oleic (wt%) | 40.78 | 51.9 | 30 | 7.6 |
| 18:2, linoleic (wt%) | 46.97 | 15.6 | 60.2 | |
| 18:3, γ-linolenic (wt%) | 10.67 | 3.6 | | |
| total saturated (wt%) | 1.56 | 28.8 | 9.53 | 90.8 |
| total unsaturated (wt%) | 98.42 | 71.7 | 90.2 | 7.6 |

** The fatty acids are denoted C:D, where C is the number of carbon atoms in the fatty acid and D is the number of double bonds in the fatty acid. A saturated fatty acids has no double bonds, e.g. palmitic acid, and an unsaturated fatty acid as at least one double bond, e.g. oleic acid and linoleic acid. Minor components may not be shown and thus the sum is not always 100 wt%.*

Catalytic materials used

The properties of metal free catalysts utilized in the study are summarized in Tables 2a and 2b, respectively.

The hydrogenation-decarboxylation catalysts B1, B2, B3 (N- and O-doped, B2 was also used as support for selected hydrogenation catalysts) were obtained by chemical and/or physical activation of N-rich biomass precursors such as chitin, chitosan, sludge from biogas or ethanol production (proteins) and de-oiled seed press cakes (proteins). The Sand O-doped carbocatalysts was obtained by activating pyrolyzed lignosulfonate. The reference hydrogenation-decarboxylation catalysts active carbon (O-doped, Fisher Scientific) and multi walled carbon nanotubes (MWCNT, Sigma) were obtained from the commercial sources and used without further treatments or modifications.

***Table 2a.*** *Textural properties of catalysts utilized*

| **Catalyst** | **Code** | **Surface area ($m^2/g$)** | **Pore volume ($cm^3/g$)** | **Heteroatom doping** |
|---|---|---|---|---|
| 5wt% PdC (Sigma) | H1 | 929 | 0.81 | O |
| Active carbon (Fisher) | ACC | 1336 | 1.38 | O |
| MWCNT (Sigma) | CNT | 250 | 1.74 | None |
| N-doped active carbon 1 | B1 | 634 | 0.46 | N and O |
| N-doped active carbon 2 | B2 | 1316 | 0.84 | N and O |
| N-doped active carbon 3 | B3 | 1373 | 1.27 | N and O |
| S-doped active carbon | S1 | 333 | 0.19 | OandS |

***Table 2b.*** *Surface chemistry and chemical composition of catalysts utilized*

| **Catalyst** | **Code** | **$^aCO_2$ uptake ($\mu$mol/g)** | **$^bNH_3$ uptake (mmol/g)** | **$^cH_2$ uptake ($\mu$mol/g)** | **Composition, at%** | |
|---|---|---|---|---|---|---|
| | | | | | **N** | **O** |
| 5wt% PdC (Sigma) | H1 | - | - | 1.35 | - | 1.88 |
| Active carbon (Fisher) | ACC | 2 | 2.36 | 0.24 | - | 8.79 |
| N-doped active carbon 1 | B1 | 15 | 1.17 | n.d | 3.31 | 8.91 |
| N-doped active carbon 2 | B2 | 50 | 1.92 | 0.48 | 8.51 | 10.26 |
| N-doped active carbon 2 | B3 | 52 | 1.87 | 0.51 | 8.2 | 10.8 |
| *$^aCO_2$-TPD, $^bNH_3$-TPD, $^cH_2$-TPR* | | | | | | |

Reactions used

The biomass feed In one embodiment, comprises substantially saturated or unsaturated fatty acids and/or derivatives thereof. In short, a biomass feed comprising substantially saturated fatty acids, and/or hydrogenated derivatives thereof, may, according to the invention, be directly converted into green hydrocarbons by decarboxylating the feedstock in the presence of a metal free hydrogenation-decarboxylation catalyst ($DeCO_x$ catalyst) under low-pressure hydrothermal conditions, which converts the feed into hydrocarbons having 6 to 20 carbon atoms, i.e. green hydrocarbons. The decarboxylation step is performed under conditions wherein the temperature is in the range 350-400 °C and the pressure is 10-30 bar. The hydrogenation step may be processed simultaneously by addition of a $H_2$ donor to reactant stream. The catalyst is a heteroatom-doped carbon material which is also obtained from biomass. The contact time of the feedstock with the catalyst is in the range from 180 to 250 minutes, when operating in batch mode. In one embodiment, the catalyst is an N- or O-doped carbon material. In one embodiment, the hydrogenation-decarboxylation catalyst is an N-doped carbon material. The method may be carried out either as a batch process or as a continuous process.

Scheme 1 shows the reactions leading to the formation of hydrocarbon mixtures from saturated fatty acids.

The overall reaction is a combination of decarboxylation and hydrothermal cracking.

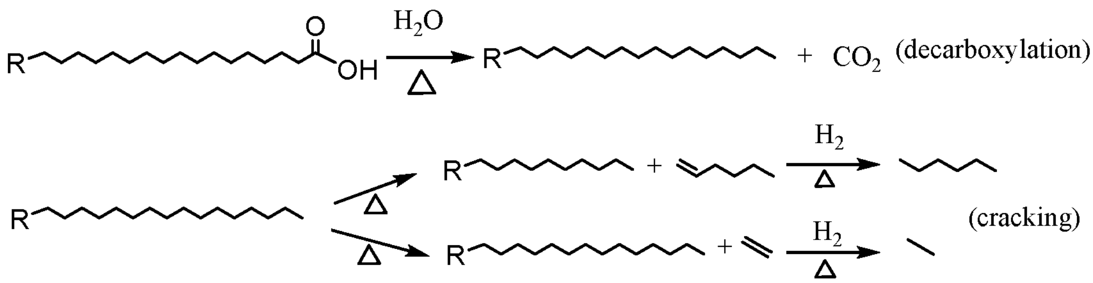


***Scheme 1.*** *Reaction leading to the formation of hydrocarbon mixtures from saturated fatty acids*

The biomass feed In one embodiment, comprises unsaturated fatty acids. In short, a biomass feed comprising unsaturated fatty acids and/or derivatives thereof, may, according to the invention, be converted into green hydrocarbons by simultaneously hydrogenating the unsaturated fatty acids and/or derivatives thereof in the feed by bringing the feed in contact with a $H_2$-donor in the presence of $H_2O$ and hydrogenation-decarboxylation catalyst. The hydrogenation results in production of substantially saturated fatty acids and/or derivatives thereof. The hydrogenated feed subsequently decarboxylated in the presence of hydrogenation-decarboxylation catalyst under low-pressure hydrothermal conditions, which converts the feed into a mixture of paraffinic hydrocarbons having 6 to 20 carbon atoms, i.e. green diesel. The method may be carried out either as a batch process or as a continuous process.

For hydrogenation,, the liquid $H_2$-donor may be chosen from a group of small organic acids or alcohols having between 1 and 4 carbons. In one embodiment, the $H_2$-donor is at least one selected from the group consisting of formic acid (HCOOH), acetic acid ($CH_3COOH$), methanol ($CH_3OH$), ethanol ($C_2H_5OH$), and glycerol (glycerin) ($CH_2OH$-CHOH-$CH_2OH$) or their mixtures. In one embodiment, the $H_2$-donor is HCOOH. The selective dehydrogenation of HCOOH to $H_2$ is favored by hydrothermal conditions and the heteroatom doped carbon catalysts. Scheme 2 shows plausible reactions leading to formation of $H_2$ from HCOOH. In case of C1-C4 alcohols $H_2$-production is achieved via aqueous phase/steam reforming.

One of the main advantages of using a heteroatom-doped carbon as a decarboxylation/deoxygenation catalyst is that it is not susceptible to deactivation via CO poisoning.

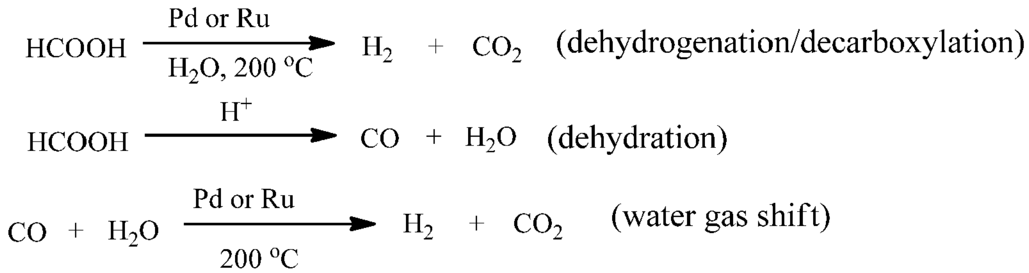


***Scheme 2.*** *Plausible reactions leading to formation of $H_2$ from HCOOH.*

In one embodiment, the ratio of the feed to $H_2O$ is between 1:4 and 1:10 (w/w).

In one embodiment, the ratio of the $H_2$-donor to feed is up to 0.77 (w/w), in yet another embodiment it is 0.7 to 0.77 (w/w).

The hydrogenation catalyst In one embodiment, comprises at of heteroatom doped carbons (N or O-doped carbon).

The contact time of the feedstock with the hydrogenation catalyst is In one embodiment, 60-120 minutes, for a batch-wise process.

Scheme 3 shows the reactions leading to the formation of saturated fatty acids from the different feedstocks.

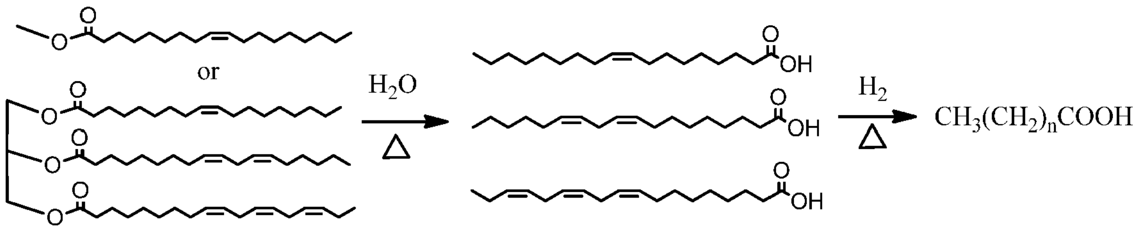


*Scheme 3. Reaction leading to the formation of saturated fatty acids from the different feedstocks*

The decarboxylation is performed under conditions wherein the temperature is 350-400 °C and the pressure is 10-30 bar. The hydrogenation-decarboxylation catalyst is a heteroatom-doped carbon material. In the invention the hydrogenation-decarboxylation catalyst is an N- or O-doped carbon material. In one embodiment, the hydrogenation-decarboxylation catalyst is an N-doped carbon material. The contact time of the feedstock with the hydrogenation-decarboxylation catalyst is In one embodiment, 180-250 minutes in batch mode, while a space velocity of 0.05-1/h is applied during continuous operation.

Scheme 1 above shows the reactions leading to the formation of hydrocarbon mixtures from saturated fatty acids. The overall reaction is a combination of decarboxylation and hydrothermal cracking.

A system for preforming the method according to the invention is not presently claimed. The system comprises a single reactor (R) comprised a bed of a hydrogenation-decarboxylation catalyst, wherein the catalyst comprises heteroatom-doped carbon.

The system may further comprise a heating oven (H) or other heating means maintained at a desired temperature.

The system may further comprise a back pressure regulator (BPR) to maintain the system pressure at the desired pressure.

The system may further comprise a gas liquid separator (S) to separate liquid hydrocarbons from gas. In one embodiment, which is not part of the claimed invention, the system comprises a cooled gas liquid separator S to separate liquid hydrocarbons from gaseous products.

In Figure 1 one example of a plant comprising the system according to the invention is shown. The plant may be referred to as a single reactor setup used in continuous production of renewable hydrocarbons. The plant comprises a first feed (F1) comprising the feed of biomass and a second feed (F2) comprising an aqueous solution of $H_2$ donor. Pumps (P1) and (P2) transport the feeds (F 1) and (F2) via the pressure gauge (G1) into hydrogenation/decarboxylation reactor R maintained at 350-400 °C. The system pressure is maintained at 10-30 bar with the help of a back pressure regulator (BPR). A heating oven (H) maintained at 100-140 °C enclosing the reactor R and BPR is also present. The decarboxylated fatty acids, i.e. the green hydrocarbons are transported to a gas liquid separator (S), wherein the green hydrocarbons are separated from the gases produced. The temperature of the liquid separator (S) is adjustable between 5-50 °C.

In Figure 3 plausible reactions leading to formation of $H_2$ from formic acid, acetic acid, methanol, ethanol and glycerin are shown.

Experiments

***The method performed in a discontinuous manner (as a batch process)*** - 13.9 ml discontinuous/batch reactors were assembled from 19 mm (3/4 inch) Swagelok bulkhead union and plugs. The reactants (feed, $H_2O$ and $H_2$ donor) along with the catalyst were accurately weighed into the reactor, the reactor was tightly sealed and heated to desired reaction temperature (380-400 °C) in a muffle oven. The mass ratio of feed to $H_2O$ was varied between 1:4 to 1:10 (w/w) unless specifically mentioned. Also, the mass of the reactants were adjusted so that the reactants occupy only 12-13% of the total reactor volume at room temperature.

Batch experiments were also conducted in the same reactors at reduced temperatures, to investigate $H_2$ production/hydrogenation activity of the deoxygenation catalysts. The catalyst along with reactants (feed, $H_2O$ and $H_2$ donor) were accurately weighed into the reactor, tightly sealed and heated to desired reaction temperature (200-350 °C) in a muffle oven. The mass ratio of feed to $H_2O$ was varied between 1:4 to 1:10 (w/w) unless specifically mentioned

Hydrogenation experiments were conducted in batch mode using the catalysts summarized in Table 2a using aqueous HCOOH in situ $H_2$ donor. The results of batch experiments showing the $H_2$ production/hydrogenation activity of the catalytic materials are presented in Table 3.

***Table 3.*** *Catalytic activity of upon hydrogenation of TOFA using HCOOH as $H_2$ donor*

| Catalyst | T (°C) | Degree of hydrogenation % | Yield % | | |
|---|---|---|---|---|---|
| | | | DeCOx product | Stearic acid | Oleic acid |
| ACC# | 200 | 25 | 0 | 10 | 61.9 |
| B2# | 200 | 33 | 0 | 14.8 | 65 |
| B3# | 200 | 32 | 0 | 16 | 62.3 |
| B2 | 300 | 82 | 2.2 | 66 | 31.5 |
| B3 | 300 | 83 | 2.9 | 65.2 | 31.8 |
| B2* | 350 | 100 | 30 | 69.5 | 0 |
| Conditions: 50 mg catalyst *150 mg, 200 mg TOFA, 150 mg HCOOH, 1.5 g $H_2O$, 2h #4 h, (reactor volume was 13.9 ml ) | | | | | |

The data presented in Table 3 clearly indicate the excellent hydrogenation activity of all the catalysts Complete saturation of fatty acids multiple bonds was achieved with all the metal based catalysts in short times under hydrothermal conditions. The selective dehydrogenation of HCOOH to $H_2$ was favored by metal free carbon catalysts under the hydrothermal conditions (see Scheme 2 above). The hydrogenation activity is significantly enhanced at elevated temperatures (300 °C or higher) as hydrothermal dehydrogenation becomes favorable under these conditions. Further among the metal-free catalysts, N-doped carbons shows the improved activity for hydrogenation which served as the basis for the single reactor continuous process. The $H_2$ production most likely takes place through a combination of decarboxylation and water gas shift reaction, which would explain the increased hydrogenation rate at elevated temperatures. The nitrogen-doped carbons (B2 and B3) were also able to catalyze these reactions at 300-380 °C, see Table 3 and 4.

The main criteria for complete hydrogenation was found to be the degree of unsaturation in feedstock, which determined the amount of HCOOH/liquid $H_2$ donor needed to saturate the multiple bonds. For example, in case of TOFA and sunflower oil a HCOOH:feed ratio (w/w) of 0.70-0.77 was enough, while for rapeseed oil the ratio was 0.45. In case of TOFA, stearic acid was the hydrogenation product, while for rapeseed and sunflower oil it was a mixture of palmitic and steric acid (Figure 3).

The hydrogen donor was not required for the saturated feedstocks (octanoic acid, palmitic, stearic acid, tristearin and coconut oil).

For fatty acid esters hydrogenation was accompanied by hydrolysis which produced C1-C3 alcohols as byproducts which also contributed to the production of hydrogen and light hydrocarbons (Figure 2).

The results of decarboxylation studies conducted with saturated fatty acids/fatty acid derivatives are summarized in Table 4. The results demonstrate the catalytic potential of carbon materials as metal-free catalysts upon decarboxylation of saturated fatty acids/esters at 350-400 °C. Importantly, the reaction catalyzed by carbon materials (in particular N- and O-doped carbon) is accompanied by 33-38wt% liquid range cracking products (C6-C16). This may reduce or even eliminate the need of downstream cracking/isomerization step for obtaining diesel range liquid hydrocarbons). Thus, in the decarboxylation step in the method according to the invention, the overall reaction is a combination of decarboxylation and hydrothermal cracking (See Scheme 1 above). This is in contrast to the process catalyzed by precious metals (Pt and Pd), where decarboxylation and hydrogenation products are observed exclusively, and wherein an additional cracking step is needed in order to convert the feed into C6-C16 hydrocarbons.

Consequently with the metal-free carbocatalysts it was possible to directly obtain liquid range hydrocarbons from biomass feeds whereas solid C17, C15 saturated hydrocarbons are exclusively obtained as products with precious metal catalysts. Thus the overall deoxygenation reaction is a combination of decarboxylation and hydrothermal cracking (Figure 4).

***Table 4.*** *Catalytic activity of carbocatalysts upon hydrothermal decarboxylation of saturated fatty acids and esters*

| Feed | Catalyst | Conversion % | Yield % | | | Liquid wt% | Gas wt% |
|---|---|---|---|---|---|---|---|
| | | | DeCOx product | Total hydrocarbon | Oxygenates and acids | | |
| octanoic acid | B2# | 74 | 65.5 | 73.7 | 26.2 | 75 | n.d |

(continued)

| Feed | Catalyst | Conversion % | Yield % | | | Liquid wt% | Gas wt% |
|---|---|---|---|---|---|---|---|
| | | | DeCOx product | Total hydrocarbon | Oxygenates and acids | | |
| palmitic acid | ACC*# | 95 | 71 | 94.7 | 5 | 65 | 30 |
| stearic acid | B2 | 99 | 63 | >99 | 0.1 | n.d | n.d |
| tristearin | Blank | 100 | 4.6 | 4 | 95.3 | 80 | n.d |
| tristearin | Pd/C§ | 100 | 99.5 | 100 | 0 | n.d | n.d |
| tristearin | ACC | 100 | 54 | 85 | 14.7 | n.d | n.d |
| tristearin | ACC* | 100 | 67 | >99 | 0.2 | 70 | 30 |
| tristearin | MWCNT* | 100 | 52 | 88 | 11.9 | n.d | n.d |
| tristearin | B1 | 100 | 40 | 62.6 | 37.4 | n.d | n.d |
| tristearin | B2 | 100 | 62 | 99.7 | 0 | 65 | 30 |
| tristearin | B3 | 100 | 61 | 99.9 | 0 | 70 | 30 |
| tristearin | S1 | 100 | 13.7 | 19.5 | 80.4 | n.d | n.d |
| Conditions: 150 mg catalyst *200 mg, 200 mg feed, 1.5 g $H_2O$, 3h #3.5 h, 380 °C §330 °C (reactor volume was 13.9 ml) | | | | | | | |

From the data presented in Table 5a, the positive influence of N-doping on the improved decarboxylation activity is clearly indicated. In fact, the most active N-doped carbocatalysts (B2 and B3) showed potential for direct conversion of unsaturated fatty acid mixtures (TOFA, rapeseed oil, rapeseed esters and sunflower oil) and pyrolysis oils into hydrocarbons (see Table 5b). The 30-53% total hydrocarbon yield observed in the absence of HCOOH suggests that the carbon materials also acted as an in situ source of $H_2$ as well as a hydrogenation catalyst under the reaction conditions; the yield reached up to 93% with the addition of $H_2$ donor (150 mg HCOOH). The superior activity of N-doped carbocatalysts (B2 and B3) is also supported by the fact that under identical conditions an ACC catalyzed process (380 °C, 3 h, 200 mg TOFA, 150 mg HCOOH) produced only 50.6% hydrocarbon.

***Table 5a.*** *Catalytic activity of heteroatom-doped carbocatalysts upon direct hydrothermal deoxygenation of TOFA real biomass feedstocks (HCOOH $H_2$ donor)*

| Entry | Feed | Catalyst | $H_2$ donor (mg) | Conversion % | $DeCO_x$ % | Total hydrocarbon % | Oxygenate and acids % | Liquid % |
|---|---|---|---|---|---|---|---|---|
| 1 | TOFA | ACC* | 0 | 100 | 10 | 30 | 70 | n.d |
| 2 | TOFA | ACC* | 150 | 100 | 39 | 50.6 | 49.3 | 70 |
| 3 | TOFA | B1 | 150 | 100 | 40 | 63 | 37 | n.d |
| 4 | TOFA | B2 | 0 | 100 | 29.3 | 53.4 | 45.4 | n.d |
| 5 | TOFA | B2 | 150 | 100 | 66 | 93 | 4.5 | 71 |
| 6 | TOFA | B3 | 150 | 100 | 63 | 99,8 | 0 | 75 |
| 7 | TOFA | B2*# | 150 | 100 | 38 | 67.5 | 32.5 | 60 |
| 8 | TOFA | B2*# spent | 150 | 100 | 23 | 40 | 60 | 65 |
| Conditions: 150 mg catalyst *200 mg, 200 mg feed #250 mg, 1.5 g $H_2O$, 3 h, 380 °C, (reactor volume was 13.9 ml ) | | | | | | | | |

***Table 5b.*** *Catalytic activity of B2 upon direct hydrothermal deoxygenation of different biomass feedstocks (coconut, sunflower, rapeseed oil, rapeseed alkyl esters and pyrolysis oil) (HCOOH $H_2$ donor).*

| Entry | Feed | Cat alyst | $H_2$ don or (mg) | Conver sion % | $DeCO_x$ % | Total hydroca rbon % | Oxygena te and acids % | Liquid % |
|---|---|---|---|---|---|---|---|---|
| 1 | coconut | B2 | 0 | 100 | 63 | 95 | 4.3 | n.d |
| 2 | TOFA: coconut | B2 | 75 | 100 | 64 | 100 | 2 | 73 |
| 3 | sunflowe r | B2 | 150 | 100 | 66 | 100 | 0 | n.d |
| 4 | rapeseed | B2 | 75 | 100 | 64 | 100 | 0 | 74 |
| 5 | rapeseed esters | B2 | 75 | 100 | 62 | 100 | 0 | 73 |
| 6 | pyrolysis oil | B2 | 150 | 100 | 100 | 48 | 62* | 60 |
| Conditions: 150 mg catalyst, 200 mg feed, 1.5 g $H_2O$, 3 h, 380 °C *400 °C, (reactor volume was 13.9 ml), *Phenolics and ketones | | | | | | | | |

Overall, the N-doped carbocatalysts (i.e. N-doped carbon material catalysts) exhibited enhanced catalytic activity upon hydrothermal deoxygenation of fatty acids and related molecules under low pressure conditions. In case of pyrolysis oils a complete disappearance of fatty acid components is observed at 400 °C. However, a detailed analysis of product of obtained from hydrothermal upgrading of pyrolysis oils is still needed to evaluate its fuel quality (Entry 6, Table 5b). In all cases, the deoxygenation was accompanied by cracking and isomerization of longer n-hydrocarbons into C6-C16 liner and branched alkanes (alkenes were detected in small amounts), aromatic and cyclic alkanes were not detected.

Thus, the method according to the invention enables direct production of liquid range C6-C20 hydrocarbons from a single feed without additional hydrocracking/isomerization steps.

***The method performed in a continuous manner (as a batch process)*** - The continuous plug flow reactor setups were built in-house using parts supplied by Swagelok (Figure 1). The heteroatom-doped (N and O) carbon materials served as catalysts for $H_2$ production/reforming/hydrogenation and decarboxylation and the reactor (R) temperature was maintained at 350-400 °C.

During continuous operation, weight hourly space velocity *(WHSV $h^{-1}$, equation 1*) of biomass feedstock (feed 1) was varied in the range of 0.05-10 $h^{-1}$ with respect to the $H_2$ production/reforming/hydrogenation/decarboxylation bed. Whereas, in the dual reactor system WHSV of feed 1 varied between 0.05-10 $h^{-1}$ with respect to the decarboxylation bed or 0.2-34 $h^{-1}$ with respect to the $H_2$ production/reforming/hydrogenation bed. The mass ratio between the $H_2$ donor and feed 1 was varied between 0-0.77 (w/w), depending on the degree of unsaturation of fatty acids present in the feed (e.g. 0 for tristearin and 0.77 for tall oil fatty acids and 0.43 for rapeseed oil). The mass ratio of feed to $H_2O$ was varied between 1:4-1:10 (w/w).

The weight hourly space velocity (WHSV $h^{-1}$) is defined as based on the flow rates of feeds as:

$$\mathrm{WHSV}\ (\mathrm{h}^{-1}) = \frac{\text{Flow rate of feed 1 (g/h)} + \text{Flow rate of feed 2 (g/h)}}{\text{Mass of catalyst (g)}} \quad (1)$$

The system pressure is constantly maintained at a desired set pressure between 10-30 bar with the help of a back pressure regulator in both process/reactor configurations. In a typical operation, the biomass feedstock (Feed 1) was co-fed with an aqueous solution of $H_2$ donor (Feed 2) over the catalyst beds. These small organic molecules present in Feed 2 produce $H_2$ in situ (via multistep reactions, Figure 2) which hydrogenate the unsaturated components/fatty acids present in feed 1 (transfer hydrogenation), the saturated fatty acids subsequently undergo decarboxylation/deoxygenation to produce the n-paraffinic hydrocarbons.

The organic liquid products from the reaction were extracted with excess $CH_2Cl_2$ and analyzed by GC and GC-MS equipped with equipped with an HP-5MS capillary column (30 m length, 0.25 mm internal diameter, 0.25 μm film thickness). The following temperature program was used for the analysis: initial column temperature was set at 50 °C

for 1 min and programmed from 50 °C to 300 °C with the rate of 15 °C·min$^{-1}$ and held at this temperature for 10 min. Helium was used as the carrier gas in both analyses. The gaseous products were also analyzed by GC-FID and on-line portable GC equipped with TCD detector.

Experiments with different $H_2$ donors showed that small organic molecules like HCOOH, $CH_3OH$ and glycerin were the most effective $H_2$ donors while $CH_3COOH$ and $C_2H_5OH$ and was not an effective hydrogen donor (Table 6). The former molecules ($CH_3COOH$ and $C_2H_5OH$) produced $CH_4$ and $CO_2$ upon decomposition and further reforming of $CH_4$ into $H_2$ was not favored under the reaction/process conditions.

***Table 6.*** *Catalytic activity upon hydrothermal hydrogenation and decarboxylation with different $H_2$ donors*

| Catalyst | $H_2$ donor (mg) | Conversion % | Hydrocar bon % | Oxygenate acids % | Alkyl esters% | Liquid yield % |
|---|---|---|---|---|---|---|
| 100 mg Ni/ACC* | $CH_3OH$ (150) | 100 | 99 | 0 | 1 | 70 |
| 100 mg Ni/ACC** | Glycerol (150) | 100 | 45 | 55 | 0 | 75 |
| 100 mg Ni/ACC** | Glycerol and $CH_3OH$ (50+100) | 100 | 58 | 32 | 10 | n.d |
| 100 mg Ni/ACC** | $C_2H_5OH$ (150) | 100 | 39 | 0.6 | 60.4 | 65 |
| 150 mg B2 | HCOOH (150) | 100 | 100 | 0 | 0 | 66 |
| 150 mg B3 | HCOOH (150) | 100 | 100 | 0 | 0 | 64 |
| 150 mg B2 | $CH_3OH$ (150) | 100 | 99 | 0 | 1 | 70 |
| 150 mg B2 | $C_2H_5OH$ (150) | 100 | 28 | 1.3 | 70 | n.d |
| 150 mg B2 | $CH_3COOH$ (150) | 100 | 29 | 71 | 0 | n.d |
| Conditions: 200 mg TOFA as feed, 1.5 g $H_2O$, 3 h, 380 °C *370 °C **400 °C, (reactor volume was 13.9 ml) | | | | | | |

The results from batch experiments served as the basis for designing continuous reactor systems. The continuous reactor system (Figures 1) was evaluated for the deoxygenation of different biomass feedstocks using different liquid $H_2$ donors.

Preliminarily experiments were conducted in the single reactor system with saturated fatty acids and triglycerides (TG) to evaluate the stability of heteroatom-doped carbocatalysts upon decarboxylation/deoxygenation reaction. The results, shown in Figure 5, indicate that the catalyst stability is mainly dependent on the contact time/space velocity (WHSV) of feed. While results presented in Figure 6 illustrate the catalytic potential of metal free catalysts for converting mixed feedstocks (60:40 w/w mixture of coconut oil and caprylic acid). Also, as expected the N- and O-doped carbon materials outperformed the O-doped (active carbon) catalysts (Figure 6).

It should be noted that the improved stability of decarboxylation/deoxygenation catalysts observed upon conversion of caprylic acid and coconut oil mixtures (Figure 6) is a consequence of increased molecular weight of the feed due to which a smaller number of moles of reactants are flowing into the reactor system.

Based on these promising results, the single reactor system was further evaluated for the direct conversion of real biomass feeds via combined hydrogenation and decarboxylation: (a) 60:40, w/w mixture of rapeseed and coconut TG (Triglyceride) and (b) 70:30, w/w mixture of rapeseed TG and TOFA (Feed 1), while 4.3 and 10% aqueous solution of HCOOH served as $H_2$ donor. The results are illustrated in Figures 7 and 8. Comparison of the plots in Figures 6 and 7 indicate the comparable performance of B2 (reduced stability of N-doped carbocatalyst) when it is operating as a combined hydrogenation/decarboxylation bed. Thus, the single reactor system shows promise for continuous biomass processing into liquid range hydrocarbons.

The plots shown in Figure 8, indicate that at reduced WHSV of 0.65 h$^{-1}$ catalyst stability improves significantly (ca two-fold improvement with stable yield of total and C17 hydrocarbon up to 118 h). Most, importantly, the product composition in liquid and gas phase remained unaffected with time on stream (Figure 8).

The mass balance in the continuous process was close to 100% with 65-75% liquid products depending on the feedstock used. In the case of C1-18 fatty acids (TOFA, steric acid), 70-75% liquid products were obtained at full conversion whereas in the case of C18 TGs (e.g. rapeseed, sunflower oil etc.), the liquid yield was a slightly lower

65-72%. The 28-35% gaseous product was mainly composed of $CO_2$, CO and light C3-C5 hydrocarbons with traces of C6-C9 isomers. The yield of C3 (propane) was almost doubled in case of TG feedstocks in comparison to fatty acids or esters.

Figure 9 shows the results of TOFA decarboxylation with ACC, B3 and regenerated B3 in the WSHV range (0.22-0.45 $h^{-1}$) in a continuous reactor system.

From the plots it is obvious that the N-doped carbocatalyst also outperforms ACC in the continuous experiments, similar to the batch experiments. The reduced stability was most likely a consequence of the increased space velocity (WHSV).

Currently, products obtained from both the batch and continuous processing are evaluated using the existing laboratory facilities (GC-FID, GC-MS, $^1$H and $^{13}$C NMR and viscosity meter). Further, tests will be conducted to evaluate fuel quality (cetane number, higher heating value, CFPP etc.). The results from GC-FID, GC-MS and NMR studies confirm that the hydrocarbons obtained in the process are mixture of n-paraffins having carbon length of C6-C20. The total amount of iso-paraffins was between 1-2 wt%, while the hydrocarbons present in gaseous product are a mixture of C3-C5 alkanes with small quantities of C3-C5 alkenes.

Figure 10 shows the typical chromatogram of liquid hydrocarbon mixtures obtained from C18 feedstocks in comparison to commercial n-paraffin standard (C6-C70, 1 mg/ml). The detailed compositions of liquid hydrocarbon obtained from selected feeds are presented in Table 6. Figure 11 shows the typical $^1$H and $^{13}$C NMR liquid products obtained from decarboxylation of tristearin at 380 °C with B2.

***Table 7.*** *Compositional overview of the liquid hydrocarbons obtained from different feedstocks*

| **Carbon number** | **Compound** | **Palmitic acid** | **Tristearin** | **TOFA (batch process)** | **TOFA (continuous process)** |
|---|---|---|---|---|---|
| Gaseous products (25-30%) | | | | | |
| 1 | $CO_2$ and CO | 25 | 27 | 25 | 26 |
| 3 | Propane | 15.5 | 32 | 14 | 15.7 |
| 4 | Butane | 15.3 | 10 | 12 | 15.3 |
| 5 | Pentane | 14 | 8.3 | 11 | 14 |
| 6 | Hexane | 5 | 4.9 | 10 | 6 |
| 3-7 | Other light hydrocarbons | 25.2 | 17.7 | 28 | 23 |
| Liquid products (70-85%) | | | | | |
| 6 | Hexane | 0.40 | 0.94 | 0.50 | 0.34 |
| 7 | Heptane | 0.62 | 0.51 | 0.82 | 0.38 |
| 8 | Octane | 1.07 | 0.88 | 0.84 | 0.12 |
| 9 | Nonane | 1.36 | 1.02 | 0.64 | 0.23 |
| 10 | Decane | 1.80 | 1.32 | 0.64 | 0.15 |
| 11 | Undecane | 2.55 | 1.76 | 0.77 | 0.34 |
| 12 | Dodecane | 5.77 | 2.09 | 0.70 | 0.73 |
| 13 | Tridecane | 4.25 | 2.77 | 1.01 | 1.19 |
| 14 | Tetradecane | 5.94 | 4.54 | 1.98 | 1.75 |
| 15 | Pentadecane | 70.40 | 8.16 | 3.67 | 2.39 |
| 16 | Hexadecane | 0.59 | 7.79 | 6.79 | 8.76 |
| 17 | Heptadecane+ C17 isomers | 0.00 | 62.77 | 66.17 | 69.18 |
| 18 | Octadecane | 0.00 | 2.24 | 1.94 | 4.03 |
| 19 | Nonadecane | 0.00 | 2.92 | 5.06 | 7.72 |
| 16 | palmitic acid | 5.25 | 0.00 | 0.00 | 0.00 |

(continued)

| Liquid products (70-85%) | | | | | |
|---|---|---|---|---|---|
| 18 | stearic acid | 0.00 | 0.29 | 8.48 | 0.36 |

## Claims

1. A method for producing hydrocarbons having 6 to 20 carbon atoms, comprising the steps of:

   a. providing a feedstock comprising saturated or unsaturated fatty acids, and/or derivatives thereof;
   b. hydrogenating and deoxygenating the feedstock in the presence of $H_2$-donor, wherein the $H_2$-donor is at least one selected from the group consisting of a carboxylic acid, and an alcohol having between 1 and 4 carbon atoms, and a metal free hydrogenation-decarboxylation catalyst under low-pressure hydrothermal conditions, wherein the temperature is in the range 350-400 °C and the pressure is in the range 10-30 bar;

   wherein the hydrogenation-decarboxylation catalyst is a metal free heteroatom-doped carbon material, and wherein the hydrogenation-decarboxylation catalyst comprises N- and O-doped carbon material.

2. The method according to claim 1, wherein the hydrogenation-decarboxylation catalyst is derived from a biogenic source.

3. The method according to any one of claims 1-2, wherein the contact time of the feedstock with the hydrogenation-decarboxylation catalyst is in the range from 180 to 250 minutes, when operating in batch mode.

4. The method according to any one of claims 1-3, wherein the weight hourly space velocity (WHSV) is in the interval 0.05-10/h, when operating in continuous mode.

5. The method according to any one of claims 1-4, further comprising, the option of(a') selectively hydrogenating and deoxygenating a feed comprising unsaturated fatty acids, and/or derivatives thereof by bringing the feedstock in contact with a $H_2$-donor and a hydrogenation catalyst in the presence of $H_2O$ wherein the hydrogenation results in production the feedstock of substantially saturated fatty acids and/or derivatives thereof.

6. The method according to claim 5, wherein the contact time of the feedstock with the hydrogenation catalyst is 60-120 minutes, when operating in batch mode.

7. The method according to claim 5, wherein the weight hourly space velocity (WHSV) for the hydrogenation is in the interval 0.05-10/h when operating in continuous mode for a single reactor configuration.

8. The method according to any one of claims 1-7, wherein the $H_2$-donor is at least one selected from the group consisting of a carboxylic acid, and an alcohol having between 1 and 4 carbon atoms.

9. The method according to any one of claims 1-8, wherein the feedstock comprises at least one selected from the group consisting of saturated and unsaturated fatty acids having 8-18 carbon atoms.

10. The method according to any one of claims 1-9, wherein the feedstock comprises at least one selected from the group consisting of fatty glycerides (mono-, di-, and tri-glycerides), and fatty alkyl esters made of fatty acids having 8-18 carbon atoms.

## Patentansprüche

1. Verfahren zum Herstellen von Kohlenwasserstoffen, die 6 bis 20 Kohlenstoffatome aufweisen, das die folgenden Schritte umfasst:

   a. Bereitstellen eines Ausgangsmaterials, das gesättigte oder ungesättigte Fettsäuren umfasst, und/oder von Derivaten davon; und

b. Hydrieren und Deoxidieren des Ausgangsmaterials in Anwesenheit eines $H_2$-Donators, wobei der $H_2$-Donator mindestens einer ist, der aus der Gruppe gewählt ist, die aus einer Carbonsäure und einem Alkohol, der im Bereich von 1 bis 4 Kohlenstoffatome aufweist, besteht, und eines metallfreien Hydrierungsdecarboxylierungskatalysators unter hydrothermischen Niederdruckbedingungen, wobei die Temperatur im Bereich von 350-400 °C liegt und der Druck im Bereich von 10-30 bar liegt;

wobei der Hydrierungsdecarboxylierungskatalysator ein metallfreies heteroatomdotiertes Kohlenstoffmaterial ist und der Hydrierungsdecarboxylierungskatalysator ein N- und O-dotiertes Kohlenstoffmaterial umfasst.

**2.** Verfahren nach Anspruch 1, wobei der Hydrierungsdecarboxylierungskatalysator von einer biogenen Quelle abgeleitet ist.

**3.** Verfahren nach einem der Ansprüche 1-2, wobei die Kontaktzeit des Ausgangsmaterials mit dem Hydrierungsdecarboxylierungskatalysator im Bereich von 180 bis 250 Minuten liegt, wenn in einem Gemengemodus gearbeitet wird.

**4.** Verfahren nach einem der Ansprüche 1-3, wobei die Gewichtsstundenraumgeschwindigkeit (WHSV) im Intervall von 0,05-10/h ist, wenn in einem kontinuierlichen Modus gearbeitet wird.

**5.** Verfahren nach einem der Ansprüche 1-4, das ferner die folgende Option umfasst: (a') wahlweises Hydrieren und Deoxidieren einer Zufuhr, die ungesättigte Fettsäuren umfasst, und/oder Derivaten davon durch Bringen des Ausgangsmaterials in Kontakt mit einem $H_2$-Donator und einem Hydrierungskatalysator in Anwesenheit von $H_2O$, wobei die Hydrierung in der Herstellung des Ausgangsmaterial im Wesentlichen gesättigter Fettsäuren und/oder Derivaten davon resultiert.

**6.** Verfahren nach Anspruch 5, wobei die Kontaktzeit des Ausgangsmaterials mit dem Hydrierungskatalysator im Bereich 60-120 Minuten liegt, wenn in Gemengemodus gearbeitet wird.

**7.** Verfahren nach Anspruch 5, wobei die Gewichtsstundenraumgeschwindigkeit (WHSV) für die Hydrierung im Intervall von 0,05-10/h liegt, wenn für eine Einzelreaktorkonfiguration in einem kontinuierlichen Modus gearbeitet wird.

**8.** Verfahren nach einem der Ansprüche 1-7, wobei der $H_2$-Donator mindestens einer ist, der aus der Gruppe gewählt ist, die aus einer Carbonsäure und einem Alkohol, der im Bereich von 1 bis 4 Kohlenstoffatome aufweist, besteht.

**9.** Verfahren nach einem der Ansprüche 1-8, wobei das Ausgangsmaterial mindestens eines umfasst, das aus der Gruppe gewählt ist, die aus gesättigten und ungesättigten Fettsäuren, die 8-18 Kohlenstoffatome aufweisen, besteht.

**10.** Verfahren nach einem der Ansprüche 1-9, wobei das Ausgangsmaterial mindestens eines umfasst, das aus der Gruppe gewählt ist, die aus Fettglyceriden (Mono-, Di- und Triglyceriden) und Fettalkylester, die aus Fettsäuren gebildet sind, die 8-18 Kohlenstoffatome aufweisen, besteht.

## Revendications

**1.** Procédé de production d'hydrocarbures ayant 6 à 20 atomes de carbone, comprenant les étapes consistant à :

a. fournir une matière première comprenant des acides gras saturés ou insaturés, et/ou des dérivés de ceux-ci ;
b. hydrogéner et désoxygéner la matière première en présence d'un donneur de $H_2$, dans lequel le donneur de $H_2$ est au moins un élément choisi parmi le groupe constitué d'un acide carboxylique et d'un alcool ayant entre 1 et 4 atomes de carbone, et d'un catalyseur d'hydrogénation-décarboxylation sans métal dans des conditions hydrothermales à basse pression, dans lequel la température est dans la plage de 350 à 400 °C et la pression est dans la plage de 10 à 30 bars ;

dans lequel le catalyseur d'hydrogénation-décarboxylation est un matériau carboné dopé par hétéroatomes sans métal, et dans lequel le catalyseur d'hydrogénation-décarboxylation comprend un matériau carboné dopé par N et O.

**2.** Procédé selon la revendication 1, dans lequel le catalyseur d'hydrogénation-décarboxylation est dérivé d'une source biogénique.

**3.** Procédé selon l'une quelconque des revendications 1 à 2, dans lequel le temps de contact de la matière première avec le catalyseur d'hydrogénation-décarboxylation est dans la plage de 180 à 250 minutes, lors d'un fonctionnement en mode discontinu.

**4.** Procédé selon l'une quelconque des revendications 1 à 3, dans lequel la vitesse spatiale horaire en poids (WHSV) est dans l'intervalle de 0,05 à 10/h, lors d'un fonctionnement en mode continu.

**5.** Procédé selon l'une quelconque des revendications 1 à 4, comprenant en outre l'option de (a') hydrogéner et désoxygéner sélectivement une matière première comprenant des acides gras insaturés et/ou des dérivés de ceux-ci en mettant la matière première en contact avec un donneur de $H_2$ et un catalyseur d'hydrogénation en présence de $H_2O$, dans lequel l'hydrogénation aboutit à la production de la matière première d'acides gras sensiblement saturés et/ou de dérivés de ceux-ci.

**6.** Procédé selon la revendication 5, dans lequel le temps de contact de la matière première avec le catalyseur d'hydrogénation est de 60 à 120 minutes, lors d'un fonctionnement en mode discontinu.

**7.** Procédé selon la revendication 5, dans lequel la vitesse spatiale horaire en poids (WHSV) pour l'hydrogénation est dans l'intervalle de 0,05 à 10/h, lors d'un fonctionnement en mode continu pour une configuration à réacteur unique.

**8.** Procédé selon l'une quelconque des revendications 1 à 7, dans lequel le donneur de $H_2$ est au moins un élément choisi parmi le groupe constitué d'un acide carboxylique et d'un alcool ayant entre 1 et 4 atomes de carbone.

**9.** Procédé selon l'une quelconque des revendications 1 à 8, dans lequel la matière première comprend au moins un élément choisi parmi le groupe constitué d'acides gras saturés et insaturés ayant 8 à 18 atomes de carbone.

**10.** Procédé selon l'une quelconque des revendications 1 à 9, dans lequel la matière première comprend au moins un élément choisi parmi le groupe constitué de glycérides gras (mono-, di- et triglycérides), et d'esters d'alkyle gras constitués d'acides gras ayant 8 à 18 atomes de carbone.

FIG. 1

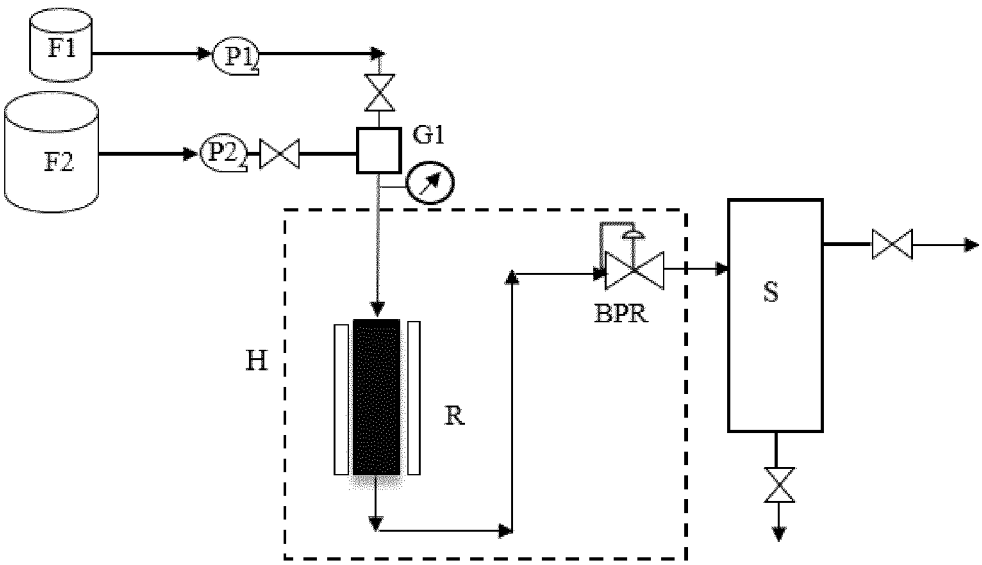

FIG. 2

Formic acid

$HCOOH \rightarrow H_2 + CO_2$ (dehydrogenation/decarboxylation)

$HCOOH \rightarrow CO + H_2O$ (dehydration)

$CO + H_2O \rightarrow H_2 + CO_2$ (water gas shift)

Acetic acid

$CH_3COOH \rightarrow CH_4 + CO_2$ (decarboxylation)

$CH_4 + H_2O \rightarrow CO + 3H_2$ (reforming)

$CO + H_2O \rightarrow H_2 + CO_2$ (water gas shift)

Methanol

$CH_3OH + H_2O \rightarrow CO_2 + 3H_2$ (overall)

$CH_3OH \rightarrow 2H_2 + CO$ (dehydrogenation/decarbonylation)

$CO + H_2O \rightarrow H_2 + CO_2$ (water gas shift)

Ethanol

$C_2H_5OH \rightarrow CH_4 + CO + H_2$ (dehydrogenation/decarbonylation)

$C_2H_5OH \rightarrow CH_3CHO + H_2$ (dehydrogenation)

$C_2H_5OH \rightarrow 2CO + 4H_2$ (decarbonylation)

$C_2H_5OH \rightarrow C_2H_4 + H_2O$ (dehydration)

$CO + H_2O \rightarrow H_2 + CO_2$ (water gas shift)

Glycerol or glycerin

$C_3H_8O_3 + 3H_2O \rightarrow 3CO_2 + 7H_2$ (overall)

$C_3H_8O_3 \rightarrow 3CO + 4H_2$ (dehydrogenation/decarbonylation)

$CO + H_2O \rightarrow H_2 + CO_2$ (water gas shift)

FIG. 3

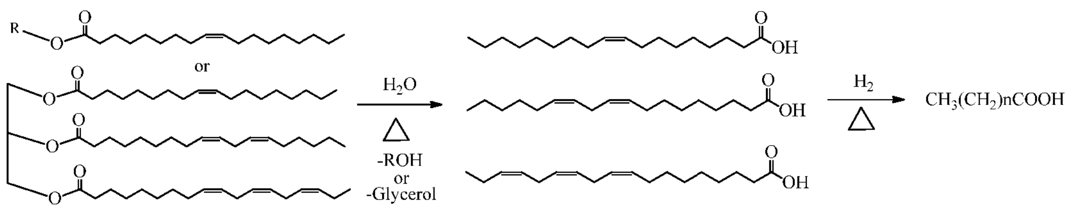

FIG. 4

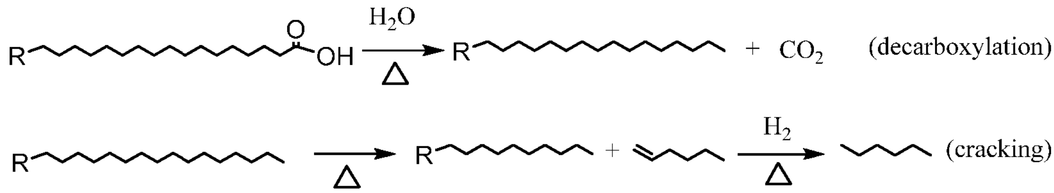

FIG. 5

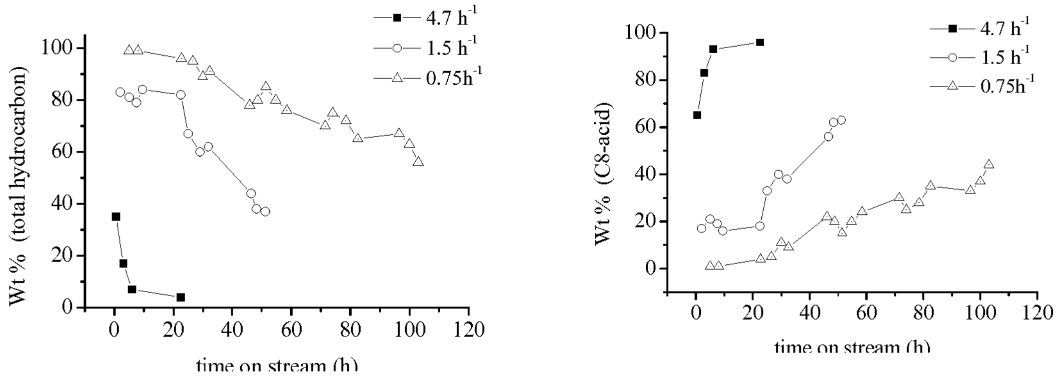
4.7 h-1
1.5 h-1
0.75h-1
Wt % (total hydrocarbon)
time on stream (h)
Wt % (C8-acid)
time on stream (h)

FIG..6

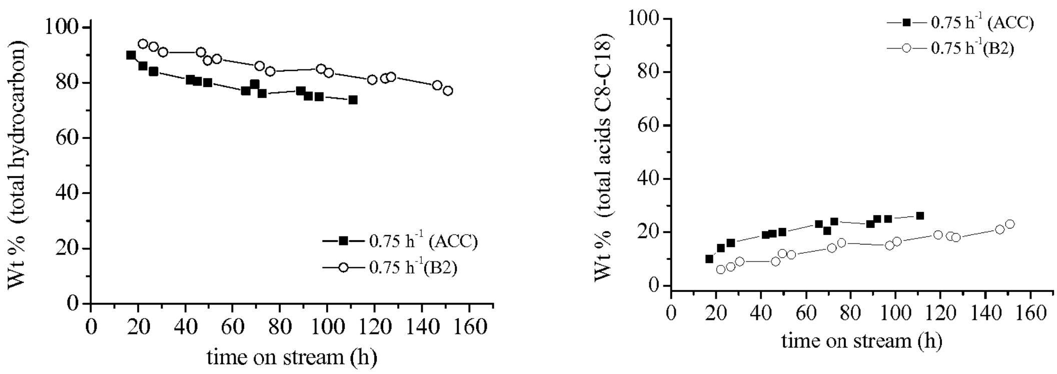
Wt % (total hydrocarbon)
100
80
60
40
20
0
0 20 40 60 80 100 120 140 160
time on stream (h)
0.75 $h^{-1}$ (ACC)
0.75 $h^{-1}$(B2)
Wt % (total acids C8-C18)
100
80
60
40
20
0
0 20 40 60 80 100 120 140 160
time on stream (h)
0.75 $h^{-1}$ (ACC)
0.75 $h^{-1}$(B2)

FIG. 7

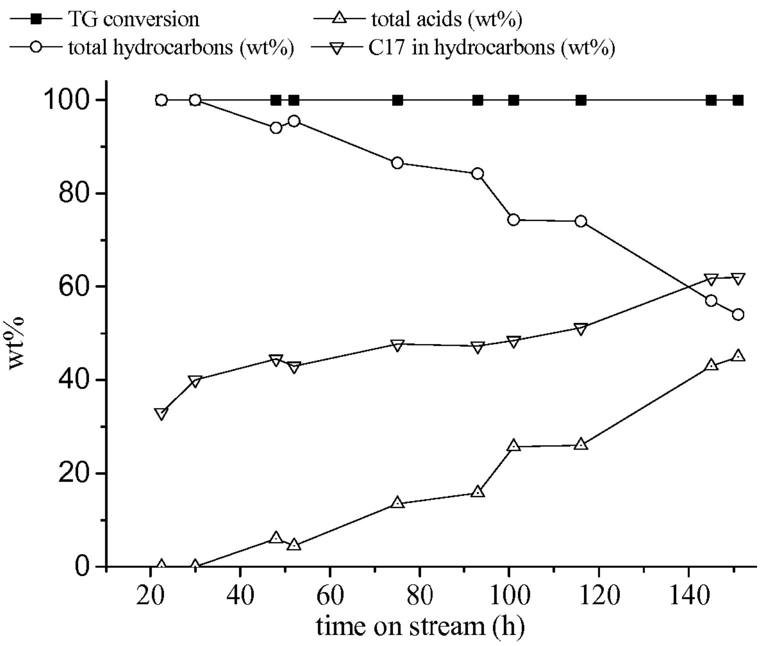
TG conversion
total acids (wt%)
total hydrocarbons (wt%)
C17 in hydrocarbons (wt%)
wt%
0
20
40
60
80
100
20
40
60
80
100
120
140
time on stream (h)

FIG. 8

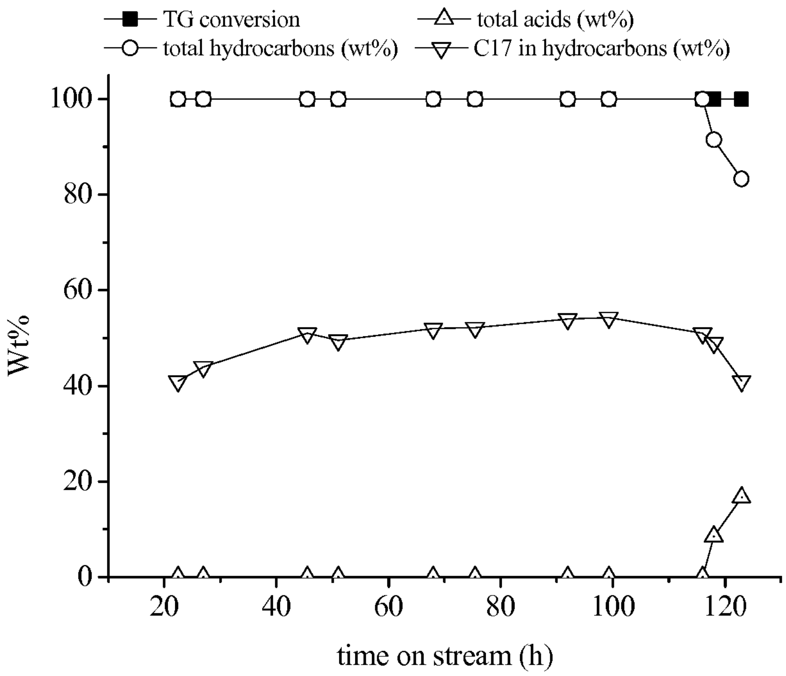
TG conversion
total hydrocarbons (wt%)
total acids (wt%)
C17 in hydrocarbons (wt%)
Wt%
0
20
40
60
80
100
20
40
60
80
100
120
time on stream (h)

FIG. 9

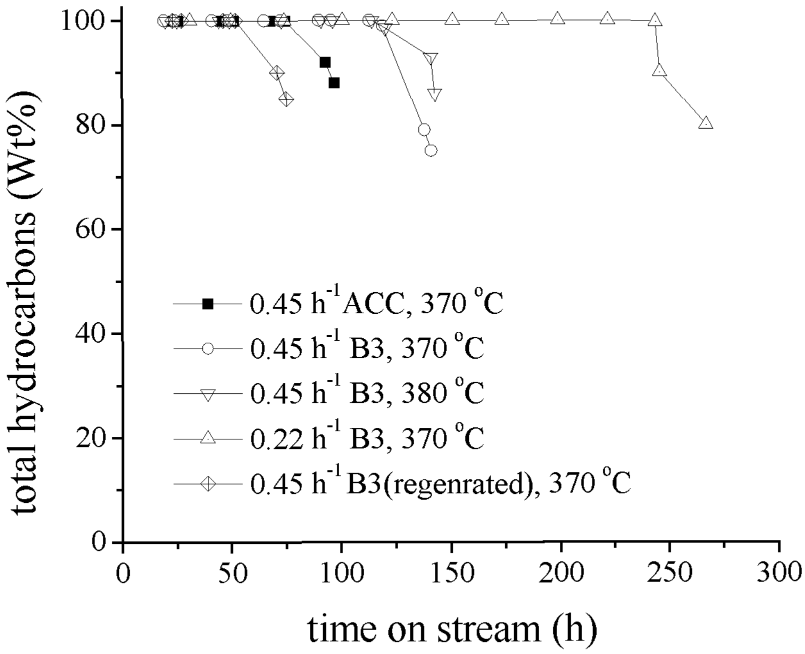
0.45 h⁻¹ACC, 370 °C
0.45 h⁻¹ B3, 370 °C
0.45 h⁻¹ B3, 380 °C
0.22 h⁻¹ B3, 370 °C
0.45 h⁻¹ B3(regenrated), 370 °C
total hydrocarbons (Wt%)
time on stream (h)
0
20
40
60
80
100
0
50
100
150
200
250
300

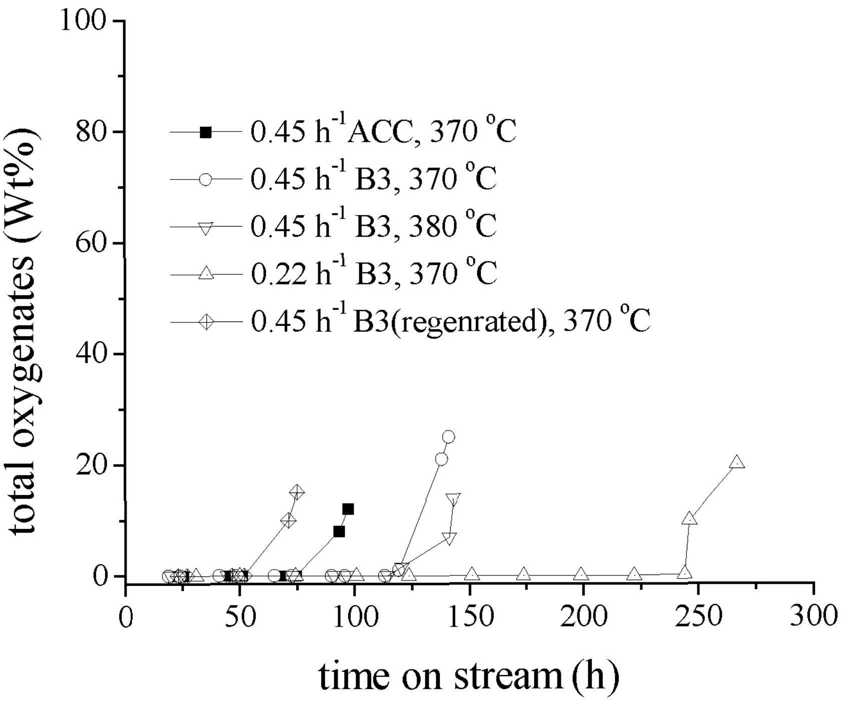
0.45 h⁻¹ACC, 370 °C
0.45 h⁻¹ B3, 370 °C
0.45 h⁻¹ B3, 380 °C
0.22 h⁻¹ B3, 370 °C
0.45 h⁻¹ B3(regenrated), 370 °C
total oxygenates (Wt%)
time on stream (h)
0
20
40
60
80
100
0
50
100
150
200
250
300

FIG. 10

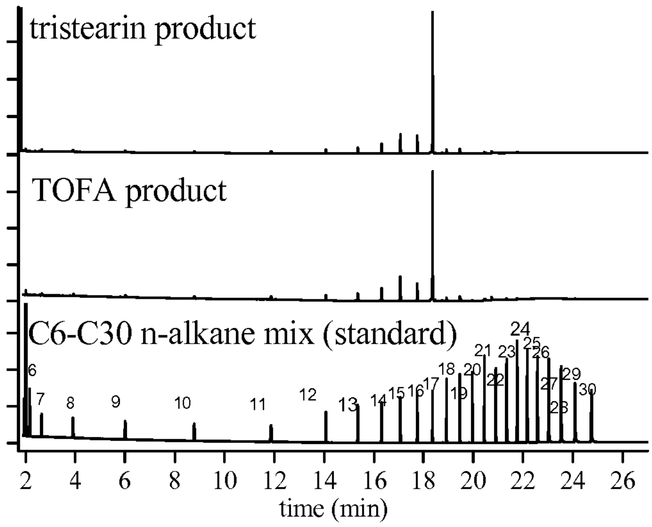
tristearin product
TOFA product
C6-C30 n-alkane mix (standard)
6
7
8
9
10
11
12
13
14
15
16
17
18
19
20
21
22
23
24
25
26
27
28
29
30
2 4 6 8 10 12 14 16 18 20 22 24 26
time (min)

FIG. 11

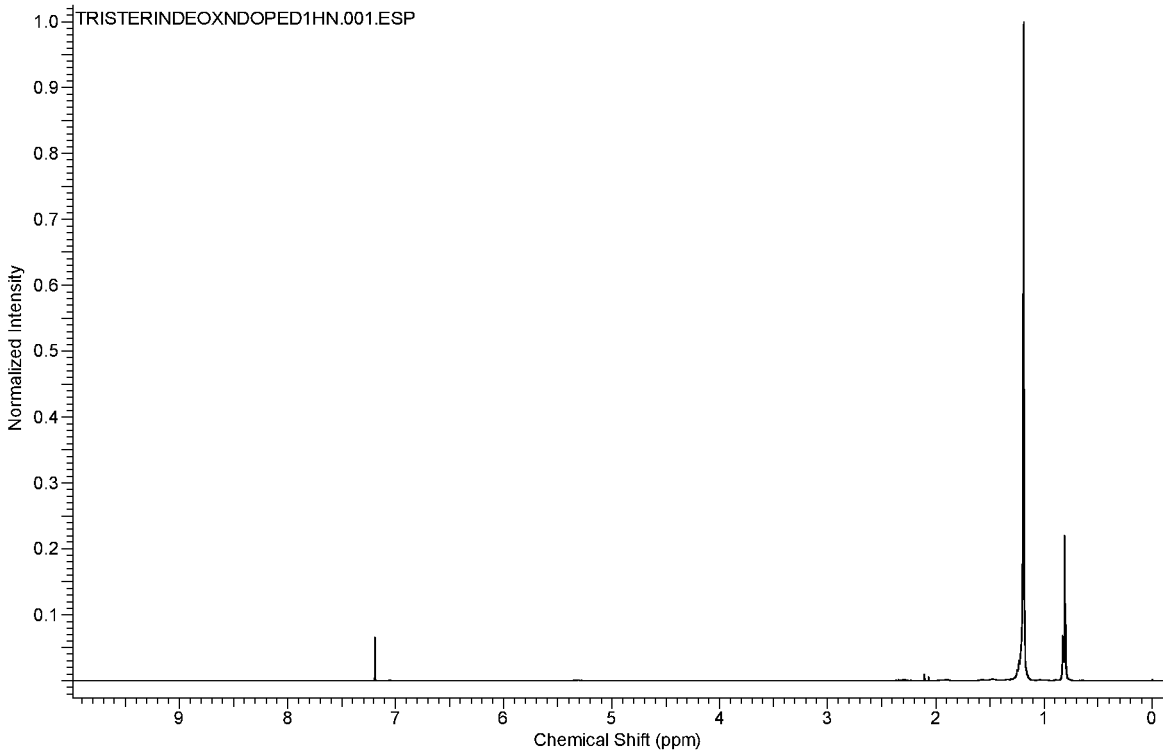
TRISTERINDEOXNDOPED1HN.001.ESP
Normalized Intensity
1.0
0.9
0.8
0.7
0.6
0.5
0.4
0.3
0.2
0.1
9
8
7
6
5
4
3
2
1
0
Chemical Shift (ppm)

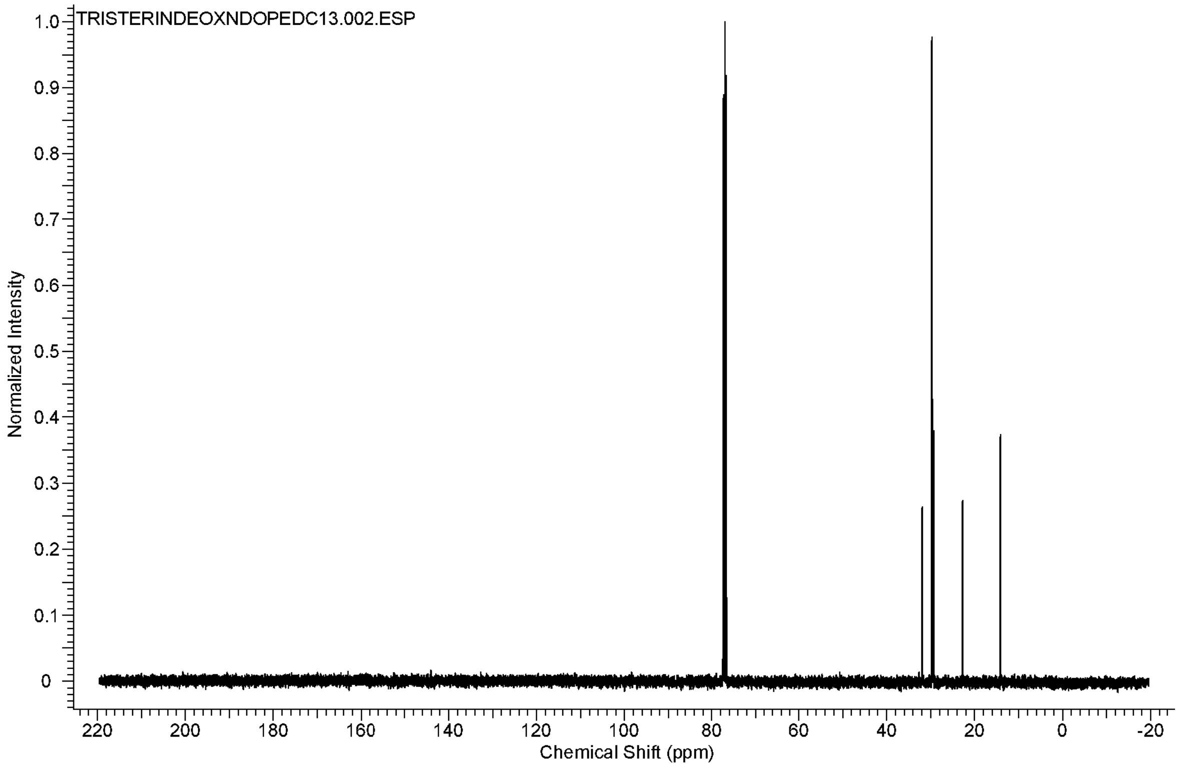
TRISTERINDEOXNDOPEDC13.002.ESP
Normalized Intensity
1.0
0.9
0.8
0.7
0.6
0.5
0.4
0.3
0.2
0.1
0
220
200
180
160
140
120
100
80
60
40
20
0
-20
Chemical Shift (ppm)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8022258 B2
- US 20160251580 A1
- US 2016251580 A


### Non-patent literature cited in the description


- **Z. HOSSAIN et al.** *Fuel,* 15 January 2018, vol. 212, 470-478
- **S. POPOV et al.** *Energy Fuels,* 2015, vol. 29 (5), 3377-3384